# EUROPÄISCHE PATENTSCHRIFT

(11) **EP 0 634 594 B1**
(45) Veröffentlichungstag und Bekanntmachung des Hinweises auf die Patenterteilung: **25.11.1998**
(21) Anmeldenummer: 94110644.5
(22) Anmeldetag: 08.07.1994
(51) Int. Cl.: F16J 15/44

(54) **Lagereinheit**
Bearing unit
Palier

(30) Priorität: 10.07.1993 DE 4323161
(43) Veröffentlichungstag der Anmeldung: 18.01.1995
(73) Patentinhaber: HOSOKAWA ALPINE Aktiengesellschaft, D-86199 Augsburg (DE)
(72) Erfinder: Konetzka, Georg, Dipl.-Ing., Ing. (grad.), D-86199 Augsburg (DE)

(56) Entgegenhaltungen:
- EP-A- 0 521 226
- DE-U- 9 210 888
- GB-A- 2 061 413

## Beschreibung

Die Erfindung betrifft die Ausbildung einer Lagereinheit für eine Vorrichtung der mechanischen Verfahrenstechnik, bei der in einem Arbeitsraum durch ein rotierendes Arbeitsteil auf ein Produkt mechanisch eingewirkt wird. Ein solches Arbeitsteil kann beispielsweise der Rotor einer Zerkleinerungsmaschine, das Sichtrad eines Windsichters oder die Förderschnecke einer Dosiervorrichtung sein. Als grundsätzliche Forderung gilt dabei stets, daß einerseits ein Austreten des Produkts aus dem Arbeitsraum in die Umgebung bzw. die Lagerung und andererseits ein Eindringen von Schmiermitteln und anderen Verunreinigungen in den Arbeitsraum wirksam verhindert werden. Die dafür entwickelten radialen oder axialen Dichtungssysteme können hinsichtlich Aufbau und Wirkungsweise als bekannt vorausgesetzt werden. Für gewöhnlich arbeiten diese Dichtungssysteme zuverlässig, doch können Schwierigkeiten durch zu geringe Druck- und Temperaturbelastbarkeit oder durch Verschleißanfälligkeit auftreten, so daß mit Rücksicht auf eine ausreichende Betriebssicherheit nur relativ niedrige Umfangsgeschwindigkeiten an der Welle des Arbeitsteils zulässig sind. Bei der Verarbeitung hochreiner und empfindlicher Produkte, z.B. bei der Arzneimittelherstellung, kommt als weitere wichtige Forderung hinzu, daß alle mit dem Produkt in Berührung kommenden Flächen von Arbeitsraum, und Arbeitsteil, sowie die Flächen des Dichtungssystems zwischen Arbeitsraum und Lagerung gut reinigbar und gegebenenfalls sterilisierbar sein müssen. Mit den bekannten Dichtungssystemen läßt sich diese Forderung nur dadurch erfüllen, daß Arbeitsteil und Lagereinheit demontiert werden, da nur so die zu reinigenden Flächen zugänglich werden. Dies ist sehr zeit- und kostenaufwendig und erfordert ein sachkundiges Fachpersonal.

Aufgabe der Erfindung ist es daher, die Lagereinheit für eine Vorrichtung der eingangs genannten Art so auszubilden, daß ein druck- und temperaturstabiler Betrieb der Vorrichtung bei gleichzeitig hoher Umfangsgeschwindigkeit der Welle des Arbeitsteils möglich ist und daß Reinigung und Sterilisierung der produktberührten Flächen im Arbeitsraum der Vorrichtung und vor allem der Flächen des Dichtungssystems ohne Demontage der Lagereinheit bei stillstehendem Arbeitsteil durchführbar ist.

Gelöst wird diese Aufgabe mit einer gemäß Anspruch 1 ausgebildeten Lagereinheit. Vorteilhafte Ausgestaltungen dieser Lagereinheit werden durch die in den Unteransprüchen angegebenen Merkmale erhalten. Ausgehend von dem bekannten Dichtungssystem, das aus der Kombination einer radial zwischen Rotor und Lagergehäuse angeordneten und von einem Sperrmedium axial durchströmten Stopfbuchse in Form einer berührungsfreien Spaltdichtung mit einem Radialdichtring besteht und das beispielsweise bei der im deutschen Gebrauchsmuster DE-GM 92 10 888 beschriebenen Labormühle Verwendung findet, wird mit einem axial verschiebbaren Rotor bei stillstehender Welle ein völlig druckdichter Verschluß des Lagergehäuse-lnnenraums gegen den Arbeitsraum und die Strömungskanäle für das Sperrmedium erreicht. Damit wird es möglich, über die Leitungen für das Sperrmedium nun Reinigungs- bzw. Sterilisationsmittel in die Stopfbuchse und von da in den Arbeitsraum einzubringen; ein Eindringen in den Lagergehäuse-lnnenraum und eine damit verbundene Beschädigung der Lager wird durch den druckdichten Verschluß wirksam verhindert.

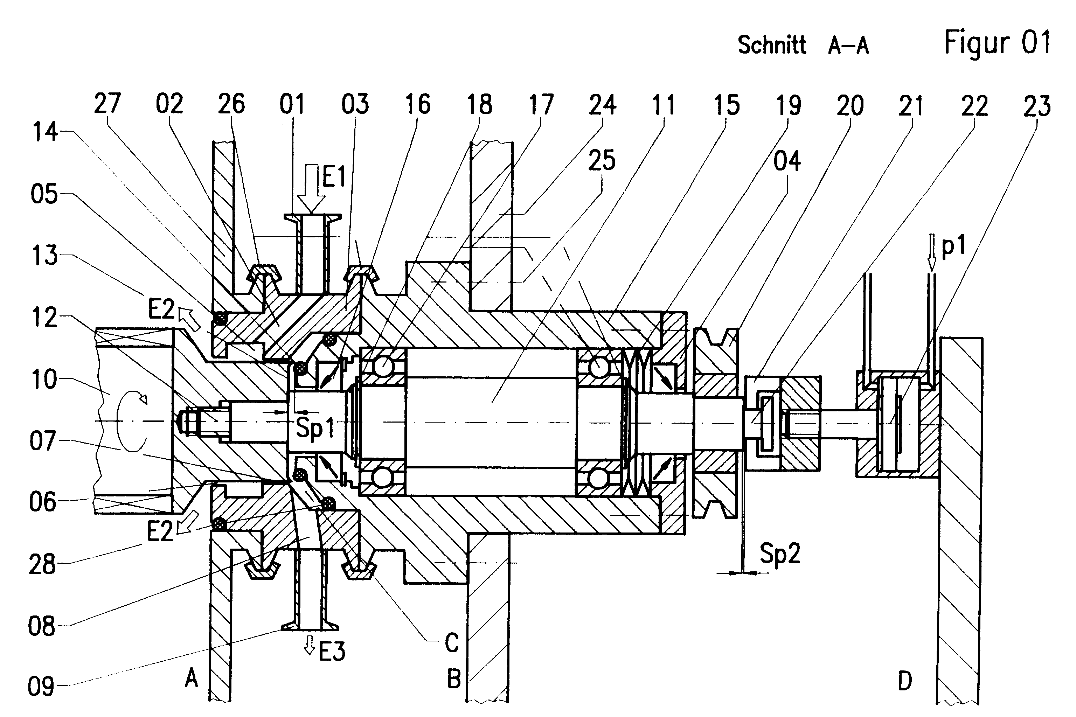

Aufbau, Betriebsweise und Reinigung bzw. Sterilisierung einer erfindungsgemäß ausgebildeten Lagereinheit werden im folgenden anhand der Zeichnungen näher erläutert. Als Beispiel ist die Lagereinheit eines unter sterilen Bedingungen betriebenen Windsichters dargestellt. Figur 01 zeigt die Lagereinheit im normalen Betriebszustand, in dem der aus Arbeitsteil 10 (Sichtrad), Welle 11 und Antriebsscheibe 20 bestehende Rotor in den Wälzlagern 17 frei drehbar ist. Der sterile Arbeitsraum A wird von der nicht sterilen Umgebung D mit den Antriebselementen (Motor, Riemenantrieb - nicht dargestellt) durch den gegen die Umgebung D mit der (nur teilweise gezeichneten) Trennwand 24 abgeschlossenen und steril gehaltenen Zwischenraum B mit den Leitungen für Sperr-, Reinigungs- und Sterilisiermedium (Anschlüsse 01, 09, 29, 32) getrennt. Durch die Kraft der Tellerfedern 19, die am Außenring des den Antriebselementen näher liegenden Wälzlagers 17 angreifen und durch den Lagerdeckel 04 vorgespannt sind, wird der Rotor über die Wälzkörper der mit Sicherungsringen 18 auf der Welle 11 gehaltenen Wälzlager 17 bis zum Anschlag des Außenrings des arbeitsraumseitigen Wälzlagers am Lagergehäuseteil 15 in Richtung Arbeitsraum A gedrückt, so daß zwischen der Stirnfläche 13 der Buchse des Arbeitsteils 10 und dem in einer Rundnut im Lagergehäuseteil 15 gehaltenen Dichtring 14 der Spalt Sp1 entsteht und der Rotor frei drehbar ist. Die Kraft der Tellerfedern 19 wird dabei nur so groß gewählt, daß die Wälzlager 17 klemmfrei verspannt werden, so daß sich ein axialspielfreier und dementsprechend ruhiger Lauf des Rotors ergibt.

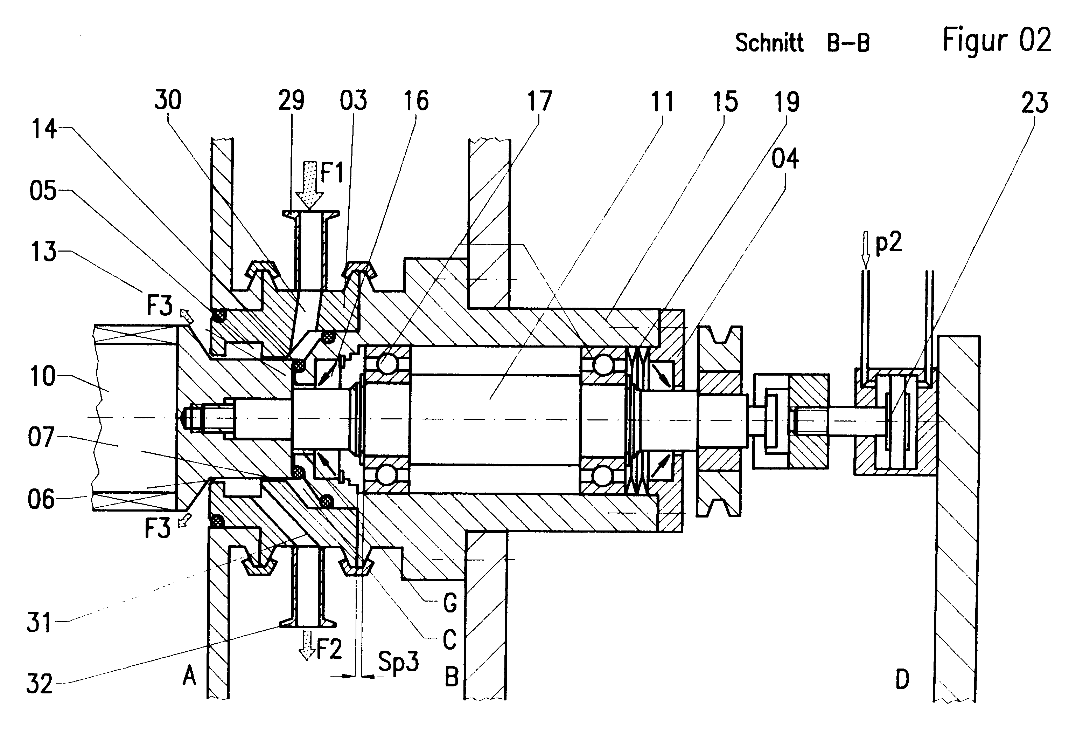

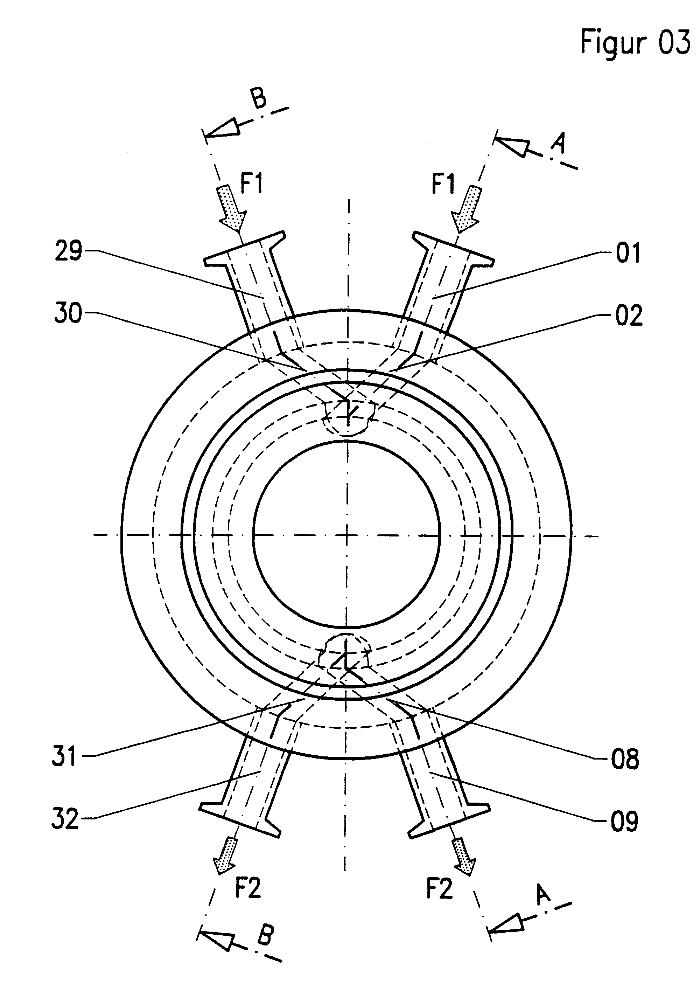

Anschlüsse 29 und 32 (Figur 02 und 03) sind während des normalen Betriebszustands durch (nicht dargestellte) Ventile verschlossen. Über Anschluß 01, Bohrung 02 und Ringkammer 05 im Lagergehäuseteil 03 wird steriles Sperrmedium E1 den Stopfbuchsenspalten 06 und 07 zugeführt. Der an den Arbeitsraum A angrenzende Stopfbuchsenspalt 06 hat eine größere Spaltweite als der gegen die Lagerung gerichtete Stopfbuchsenspalt 07, so daß sich zum Arbeitsraum A hin der Hauptsperrstrom E2 einstellt. Der durch den Stopfbuchsenspalt 07 strömende Sperrstrom E3 tritt nahezu drucklos in den Ringraum C ein und wird von hier über Bohrung 08 und Anschluß 09 abgeführt. Da zwischen Ringraum C und Lagergehäuse-lnnenraum praktisch kein Druckgefälle vorhanden ist, reicht ein einfacher Radialdichtring 16, um ein Eindringen von Sperrmedium in den Lagergehäuse-lnnenraum und von Schmiermittel in den Ringraum C wirksam zu verhindern. Die Begrenzungsflächen der Stopfbuchsenspalte 06 und 07 bilden Lagergehäuseteil 03 einerseits und Nabe des Arbeitsteils A andererseits. Für einen exakten Rundlauf ist das Arbeitsteil A mit einem relativ langen Paßsitz auf der Welle 11 zentriert und mit den Wellengewinde 12 in einem Sackloch befestigt. Auf diese Weise wird vermieden, daß sich Befestigungselemente im Arbeitsraum A befinden, an denen sich Material absetzen könnte. Aus dem gleichen Grund ist Lagergehäuseteil 03 mit Schnellspannelementen 26 im steril gehaltenen Zwischenraum B am Maschinengehäuse 27 und am Lagergehäuseteil 15 und dieses mit von D her betätigbaren Verbindungselementen (Schrauben) 25 an der Trennwand 24 befestigt. Dichtringe 28 sorgen dabei für eine spaltfreie Abdichtung zwischen den Lagergehäuseteilen 03 und 15 bzw. zwischen Lagergehäuseteil 03 und Maschinengehäuse 27. Das über die Antriebsscheibe 20 hinausragende Ende von Welle 11 ist mit einer Ringnut 22 versehen, in die mit Kolben 23 verbundene Klauen 21 eingreifen. Kolben 23 ist in einem am Maschinengehäuse befestigten Zylinder geführt und von beiden Seiten druckbeaufschlagbar.

Im Normalbetrieb (Figur 01) ist Kolben 23 von rechts mit Druck p1 beaufschlagt, wobei die Klauen 21 berührungsfrei in der Ringnut 22 und mit Spiel Sp2 zur Ringnufflanke positioniert sind.

Figur 02 zeigt die Lagerung von Figur 01 in Schließstellung bei stehender Welle 11. Durch Beaufschlagen des Kolbens 23 von links mit Druck p2 ziehen die Klauen 21 die Welle 11 gegen die Kraft der Tellerfedern 19 um den Verschiebeweg Sp3 nach rechts, bis die Stirnfläche 13 der Buchse von Arbeitsteil 10 an Lagergehäuseteil 15 und elastischem Dichtring 14 spaltfrei anliegt. Dadurch werden der Lagerinnenraum und ein kleiner, zum Ringraum C gehörender Ringspalt G gegen den Ringraum C druckdicht abgetrennt.

Reinigungs- und Sterilisiervorgang können beispielsweise wie folgt ablaufen (Figuren 01 bis 03):
1. Reinigung: In Betriebsstellung (Figur 01) wird über die Anschlüsse 01 und 29 und die Bohrungen 02 und 30 Reinigungsmittel F1 in die Ringkammer 05 und den Ringraum C unter geringe Druck eingeleitet. Zur Verbesserung des Reinigungseffekts kann dabei die Welle 11 mit Arbeitsteil 10 mit geringer Drehzahl rotieren. Die vom Arbeitsteil 10, Welle 11, Radialdichtring 16 Lagergehäuseteilen 03 und 15 und Dichtringen 14 und 28 begrenzten Räume unterliegen dem Reinigungsprozeß. Nach Durchlauf werden Teilströme F2 des Reinigungsmittels über die Bohrungen 08 und 31 und Anschlüsse 09 und 32 abgezogen. Ein Teilstrom F3 zur Spülung von Stopfbuchsenspalt 06 wird dem im Arbeitsraum A eigens eingesetzten Reinigungsmittel zugeführt. Für eine gründliche Reinigung des Stopfbuchsenspalts 07 kann das Reinigungsmittel F1 wechselweise über einen Anschluß (01 oder 29) zugeführt werden, während der andere geschlossen bleibt, so daß Stopfbuchsenspalt 07 in wechselnder Richtung durchströmt wird.
2. Spülung: Der Ablauf ist der gleiche wie bei der Reinigung, nur daß an Stelle des Reinigungsmittels ein Spülmittel zur Beseitigung der Reinigungsmittelreste verwendet wird.
3. Sterilisierung: Dazu wird die Lagerung bei stehender Welle 11 in Schließstellung (Fiugur 02) gebracht und im übrigen wie beim Vorgang der Reinigung verfahren, wobei zur Sterilisierung z.B. Heißdampf anstelle des Reinigungsmittels eingesetzt wird.
4. Trocknung: Nach dem Sterilisieren verbliebene Restfeuchtigkeit kann mit Hilfe von steriler Luft, die wie das Mittel zum Sterilisieren eingeleitet wird, bei unveränderter Stellung der Welle 11 beseitigt werden.

Danach wird die Welle 11 wieder in die Betriebsstellung gebracht; ohne Demontage der Lagereinheit ist so das System erneut einsatzbereit.

Selbstverständlich läßt sich der Ablauf der beschriebenen Vorgänge durch eine entsprechend den Erfordernissen ausgelegte Programmsteuerung automatisieren.

## Patentansprüche

1. Lagereinheit für eine Vorrichtung der mechanischen Verfahrenstechnik, bei der in einem, Arbeitsraum durch ein rotierendes Arbeitsteil (10) auf ein Produkt mechanisch eingewirkt wird,
- mit einem Lagergehäuse (03, 15), in dem der im wesentlichen aus Arbeitsteil (10) , Welle (11) und Antriebselement (20) bestehende Rotor in Lagern (17) zur Aufnahme der im Betrieb entstehenden Radial- und Axialkräfte drehbar gelagert ist,
- mit einer Abdichtung des Arbeitsraumes nach außen durch eine radial zwischen Rotor und Lagergehäuse (03, 15) angeordnete und von einem Sperr-, Reinigungs- oder Sterilisiermedium axial durchströmte Stopfbuchse in Form einer berührungsfreien Spaltdichtung (06, 07) , bei der etwa im mittleren Bereich ihrer axialen Erstreckung eine Ringkammer (05) für die Zufuhr des Mediums vorgesehen ist,
- und mit die Welle (11) berührenden Dichtelementen (16) zur Abdichtung des Lagergehäuse-lnnenraums mit den Lagern (17) gegen das Medium einerseits und die Umgebung andererseits,
dadurch gekennzeichnet, daß
a) die den Stopfbuchsenspalt (06, 07) begrenzenden Flächen durch die Umfangsfläche einer mit dem Arbeitsteil (10) mitrotierenden Buchse auf der Welle (11) und zwei dazu über ihre axiale Erstreckung radial gleichmäßig beabstandete Flächen des Lagergehäuses (03, 15) gebildet werden, zwischen denen die Ringkammer (05) für die Zufuhr des Mediums (E1) in das Lagergehäuse eingearbeitet ist,
b) anschließend an das von der Ringkammer (05) abgewendete Ende des Stopfbuchsenspalts (07) eine zweite Ringkammer (C) in das Lagergehäuse (03, 15) eingearbeitet ist, die axial zum Teil von der Stirnfläche (13) der mit dem Arbeitsteil (10) mitrotierenden Buchse begrenzt wird,
c) der aus Arbeitsteil (10), Welle (11) und Antriebselement (20) bestehende Rotor zusammen mit den Lagern (17) gegen die Kraft einer Feder (19) aus der Betriebsposition in Richtung auf die Antriebselemente axial im Lagergehäuse (03, 15) verschiebbar ausgebildet ist, wobei der Verschiebeweg (Sp3) so bemessen ist, daß die Stirnfläche (13) der Buchse in der Endstellung der Verschiebung druckdicht einer Gegenfläche am Lagergehäuse so anliegt , daß der Innenraum des Lagergehäuses (03, 15) gegen die zweite Ringkammer (C) druckdicht abgetrennt ist.

2. Lagereinheit nach Anspruch 1, dadurch gekennzeichnet, daß die Spaltweiten der Stopfbuchsenspalte (06, 07) unterschiedlich groß sind.

3. Lagereinheit nach Anspruch 2, dadurch gekennzeichnet, daß die Spaltweite des an den Arbeitsraum (A) angrenzenden Stopfbuchsenspalts (06) größer ist als die Spaltweite des anderen Stopfbuchsenspalts (07).

4. Lagereinheit nach einem der Ansprüche 1 bis 3, dadurch gekennzeichnet, daß die mit dem Arbeitsteil (10) mitrotierende Buchse mit der Stirnfläche (13) gleichzeitig die Nabe des Arbeitsteils (10) bildet.

5. Lagereinheit nach einem der Ansprüche 1 bis 4, dadurch gekennzeichnet, daß die Ringkammern (05, C) durch an ihrem Umfang mündende Bohrungen (02, 08, 30, 31) im Lagergehäuse (03,15) mit Anschlüssen (01, 09, 29, 32) für Zu- und Ablauf eines Sperr-, Reinigungs- oder Sterilisiermediums verbunden sind und daß bei jeder Ringkammer die Bohrungsmündungen für jeweils Zu- und Ablauf einander diametral gegenüberliegen.

6. Lagereinheit nach Anspruch 5, dadurch gekennzeichnet, daß bei horizontal gelagerter Welle (11) die Zulaufbohrung (02) am höchsten Punkt und die zugehörige Ablaufbohrung (08) am tiefsten Punkt der Ringkammer (05) und die Zulaufbohrung (30) am höchsten Punkt und die zugehörige Ablaufbohrung (31) am tiefsten Punkt der zweiten Ringkammer (C) münden.

7. Lagereinheit nach Anspruch 5 oder 6, dadurch gekennzeichnet, daß der die Ringkammern (05, C) und Bohrungen (02, 08, 30, 31) enthaltende Abschnitt des Lagergehäuses (03, 15) als abnehmbares Teil (03) ausgebildet und mit Schnellspannelementen (26) am Hauptgehäuse (15) und am Maschinengehäuse (27) befestigt ist.

8. Lagereinheit nach einem der Ansprüche 1 bis 6, dadurch gekennzeichnet, daß als zusätzliche Gegenfläche für die Stirnfläche (13) Der Buchse ein in einer Rundnut im Lagergehäuse (03, 15) gehaltener Dichtring (14) dient, der die Gegenfläche des Lagergehäuses (03, 15) axial etwas überragt.

9. Lagereinheit nach einem der Ansprüche 1 bis 8, dadurch gekennzeichnet, daß bei Verwendung von Wälzlagern als Lager (17) für den aus Arbeitsteil (10), Welle (11) und Antriebselement (20) bestehenden Rotor als Feder (19) mehrere, zu einem Paket zusammengesetzte und am Außenring des den Antriebselementen näher liegenden Wälzlagers angreifende Tellerfedern dienen, die durch den das Lagergehäuse (03, 15) verschließenden Lagerdeckel (04) vorgespannt sind.

## Claims

1. Bearing unit for a mechanical process technology system where a rotating processing element (10) acts mechanically upon a product within a processing chamber,
- with a bearing housing (03, 15) in which the rotor consisting mainly of processing element (10), shaft (11) and drive element (20) is supported to rotate in bearings (17) to permit the radial and axial forces which arise during operation to be absorbed,
- with a seal to seal the processing chamber to the outside effected by means of a stuffing box in the form of a non-contact gap seal (06, 07) located radially between the rotor and bearing housing (03, 15) and rinsed axially by a sealing, cleaning or sterilising medium, whereby in the approximate centre of its axial extent, an annular chamber (05) is incorporated to permit supply of the medium,
- and with the sealing elements (16) which contact the shaft (11) to seal the inside of the bearing housing with the bearings (17) against the medium on the one side and the atmosphere on the other side,
characterised in that
a) the surfaces bordering the stuffing box gap (06, 07) consist of the peripheral surface of a bush which co-rotates with the processing element (10) on the shaft (11) and two surfaces of the bearing housing (03, 15) which in their axial span are uniformly spaced radially, and between which the annular chamber (05) for the supply of the medium (E1) into the bearing housing is incorporated.
b) at the end of the stuffing box gap (07) turned away from the annular chamber (05), a second annular chamber (C) is incorporated into the bearing housing (03, 15) which is in part bordered axially by the front face (13) of the bush which co-rotates with the processing element (10),
c) the rotor, consisting of processing element (10), shaft (11), and drive element (20), is designed along with the bearings (17) to slide against the force of a spring (19) from the operating position axially in the direction of the drive elements in the bearing housing (03, 15), whereby the displacement range (Sp3) is dimensioned such that when the final position is reached, the front face (13) of the bush lies flush against a countersurface of the bearing housing so that the inside of the bearing housing (03, 15) is hermetically sealed against the second annular chamber (C).

2. Bearing unit in accordance with Claim 1, characterised in that the widths of the stuffing box gaps (06, 07) are different.

3. Bearing unit in accordance with Claim 2, characterised in that the width of the stuffing box gap (06) which borders the processing chamber (A) is wider than the other stuffing box gap (07).

4. Bearing unit in accordance with one of the Claims 1 - 3, characterised in that together with the front surface (13), the bush which co-rotates with the processing element (10) simultaneously forms the hub of the processing element (10).

5. Bearing unit in accordance with one of the Claims 1 - 4, characterised in that the annular chambers (05, C) are equipped with connections (01, 09, 29, 32) to permit the supply and discharge of a sealing, cleaning or sterilising medium by means of boreholes (02, 08, 30, 31) in the bearing housing (03, 15) and that for each annular chamber, the mouths of the inlet and outlet boreholes are diametrically opposed to each other.

6. Bearing unit in accordance with Claim 5, characterised in that with a horizontally arranged shaft (11), the inlet borehole (02) leads into the highest point and the associated outlet borehole (08) leads out of the lowest point of the annular chamber (05), and that the inlet borehole (30) leads into the highest point and the associated outlet borehole (31) leads out of the lowest point of the second annular chamber (C).

7. Bearing unit in accordance with Claim 5 or 6, characterised in that the section of the bearing housing (03, 15) which houses the annular chambers (05, C) and boreholes (02, 08, 30, 31) is designed as a removable section (03) and is fastened to the main housing (15) and to the machine housing (27) by means of quick-action clamp closures (26).

8. Bearing unit in accordance with one of the Claims 1 - 6, characterised in that a sealing ring (14) which is fitted into a circular groove in the bearing housing (03, 15) and which slightly projects over the opposing surface of the bearing housing (03, 15) in axial direction, serves as an additional opposing surface for the front face (13) of the bush.

9. Bearing unit in accordance with one of the Claims 1 - 8, characterised in that if anti-friction bearings are used as the bearings (17) for the rotor consisting of processing element (10), shaft (11), and drive element (20), the spring element (19) consists of several cup springs configured into a set which engage with the outside race of the anti-friction bearing closest to the drive elements and which are pretensioned by means of the bearing cover (04) which seals the bearing housing (03, 15).

## Revendications

1. Système de roulements d'un dispositif de traitement mécanique comprenant une chambre de travail dans laquelle un produit subit l'effet mécanique d'un outil rotatif (10), système de roulements muni
- d'un boîtier (03, 15) dans lequel le rotor tournant essentiellement composé de l'outil (10), l'arbre (11) et l'organe de commande (20) repose sur des roulements (17) qui supportent les charges axiales et radiales dues au service,
- d'un dispositif d'étanchéification de la chambre de travail, séparant boîtier (03, 15) et rotor, constitué par les entrefers (06,07) présentants dans leur partie moyenne une gorge d'alimentation (05) en fluide à étancher, de nettoyage ou de stérilisation les parcourant ensuite en sens axial,
- de joints d'étanchéité par frottement (16) en contact avec l'arbre (11) pour la protection du boîtier muni des roulements (17) contre la pénétration du fluide d'une part et contre celle d'impuretés d'autre part,
caractérisé par
a) un entrefer (06,07) limité par la surface extérieure d'une bague rotative montée avec l'outil (10) sur l'arbre (11) et deux surfaces du boîtier (03, 15) ayant un jeu radial constant sur toute leur longueur axiale et entre elles la gorge d'alimentation (05) en fluide (E1),
b) une deuxième gorge (C) réalisée dans le boîtier (03, 15) du côté de l'entrefer (07) opposé à la gorge (05) et limitée en partie dans le sens axial par l'épaulement (13) de la bague rotative solidaire de l'outil (10),
c) un rotor composé de l'outil (10), l'arbre (11) et l'organe de commande (20) et des roulements (17) qui tous ensembles sont soumis à la pression du ressort (19) les faisant coulisser dans le boîtier ( 03, 15) vers l'organe de commande, le mouvement (*Sp3*) étant choisi de façon à ce qu'en fin de course l'épaulement (13) de la bague soit en appui étanche sur la surface du boîtier (03,15) qui lui est opposée séparant ainsi l'intérieur du boîtier (03, 15) et la deuxième gorge (C).

2. Système de roulements selon revendication 1, caractérisé par des entrefers (06, 07) à dimensions différentes.

3. Système de roulements selon revendication 2, caractérisé par des entrefers (06, 07) à dimensions différentes, l'entrefer (06) voisin de la chambre de travail (A) étant plus grand que l'entrefer (07).

4. Système de roulements selon l'une des revendications de 1 à 3, caractérisé par une bague rotative ayant un épaulement (13), synchronisée avec l'outil (10) et servant en même temps de moyeu à l'outil (10).

5. Système de roulements selon l'une des revendications de 1 à 4, caractérisé par des gorges (05, C) reliées à des raccords (01, 09, 29, 32) d'alimentation et d'évacuation de fluide à étancher, à nettoyer et à stériliser par des trous (02, 08, 30, 31) pratiqués dans le boîtier (03, 15), les trous d'alimentation et d'évacuation de chaque gorge étants diamétralement opposés l'un à l'autre.

6. Système de roulements selon revendication 5, caractérisé par un arbre (11) reposant à l'horizontal pour lequel le trou d'alimentation (02) est au point culminant et le trou d'évacuation (08) est au point le plus bas de la gorge (05) et le trou d'alimentation (30) est au point culminant et le trou d'évacuation (31) est au point le plus bas de la deuxième gorge (C).

7. Système de roulements selon revendication 5 ou 6, caractérisé par une pièce démontable (03), section du boîtier (03, 15) fixée au boîtier principal (15) et au bâti de la machine (27) par des éléments de serrage rapide (26) dans laquelle sont pratiqués les gorges (05, C) et les trous (02, 08, 30, 31).

8. Système de roulements selon l'une des revendications de 1 à 6 , caractérisé par joint (14) logé dans une rainure circulaire du boîtier (03, 15) légèrement en saillie de celui-ci servant d'appui supplémentaire à l'épaulement (13).

9. Système de roulements selon l'une des revendications de 1 à 8, caractérisé par un rotor composé par l'outil (10), l'arbre (11) et l'organe de commande (20) qui, dans le cas où les paliers (17) sont des roulements, a comme ressort (19) un paquet de plusieurs rondelles ,,belleville" en appui sur la bague extérieur du palier voisin de l'organe de commande, précontraint par l'effort du couvercle (04) du boîtier (03, 15).
